# EUROPÄISCHE PATENTSCHRIFT

(11) **EP 0 696 713 B1**
(45) Veröffentlichungstag und Bekanntmachung des Hinweises auf die Patenterteilung: **14.01.1998**
(21) Anmeldenummer: 95111818.1
(22) Anmeldetag: 27.07.1995
(51) Int. Cl.: F24J 2/34

(54) **Solare Warmwassererzeugung**
Solar hot water supply
Système d'alimentation en eau chaude solaire

(30) Priorität: 10.08.1994 DE 4428251
(43) Veröffentlichungstag der Anmeldung: 14.02.1996
(73) Patentinhaber: KLAUS HERRMANN AKTIENGESELLSCHAFT, 58239 Schwerte (DE)
(72) Erfinder: Krämer, Thomas, D-74740 Adelsheim (DE); Herrmann, Klaus, D-58239 Schwerte (DE)
(74) Vertreter: Patentanwälte Meinke, Dabringhaus und Partner

(56) Entgegenhaltungen:
- CH-A- 246 216
- FR-A- 2 305 695
- FR-A- 2 524 619
- US-A- 4 587 952

## Beschreibung

Die Erfindung richtet sich auf eine Vorrichtung zur Warmwassererzeugung mittels Solarenergie mit einem Gehäuse, wobei ein Oberflächenbereich von einem Wärmeabsorber gebildet ist und wobei innerhalb des Gehäuses ein Warmwasserreservoir vorgesehen ist.

Eine derartige Vorrichtung ist beispielsweise aus der DE-A-37 28 551 bekannt, wobei dort Mittel vorgesehen sind, die das sich erwärmende Wasser aus unterschiedlichen Bereichen des Wasserreservoirs mit Hilfe einer Pumpe umwälzen.

Unter dem Produktnamen "Rainbow 300" ist eine derartige Vorrichtung der Anmelderin bekannt. Eine vergleichbare Vorrichtung zeigt auch die Schweizer Patentanmeldung 01 933/92-0 bzw. die entsprechende EP-A-0 574 954.

Bei den bekannten Lösungen versucht man, durch Zwischenböden oder Trennbleche eine Temperaturschichtung des von Solarenergie erhitzten Wärmeträgermediums zu erreichen, wobei beispielsweise aus der zuletzt genannten Schweizer Patentanmeldung eine Trennblechlösung oder Tank-in-Tanklösung bekannt ist, bei der es durch entsprechende Regelung möglich gemacht werden soll, daß kaltes Brauchwasser so durch die Solaranlage geführt wird, daß am Austritt der Vorrichtung die gewünschte Endtemperatur erreicht ist, so daß eine Nachheizung durch Zusatzenergie entbehrlich ist. Wird kein erwärmtes Brauchwasser benötigt, wird das erwärmte Wasser in einen wärmeisolierten Speicher geleitet, dort bereitgehalten, wie dies die eingangs genannte DE-A-37 28 551 beschreibt.

Probleme der bekannten Lösung bestehen u.a. darin, daß nur druckloses Heißwasser zur Verfügung steht oder aber daß die Temperaturschichtungen in den Speichern in vergleichsweise kurzer Zeit durch Wärmeleitungen abgebaut werden, ein Nachteil, den gerade möglichst flachbauende und hier im Vordergrund stehende Solarwarmwasserbereiter aufweisen.

Ein weiteres Problem der bekannten Lösung besteht darin, daß dann, wenn ein Wärmeträger in das Wasser eingesetzt wird, dieses umgepumpt werden muß; werden Wärmetauscher mit kleinen Rohren eingesetzt, kommt es zwangsläufig zu Verkalkungen, da mit Kaltwasser immer ein gewisser Eintrag und damit ein laufender Anteil von Kalk einhergeht, es sei denn, daß man aufwendige Entkalkungen vornimmt.

Aus der DE-A-30 26 982 ist ein heißluftbeaufschlagter Warmwassertank mit einer tauchsiederartigen Zusatzheizung bekannt, wobei dort über ein Gebläse die solarmäßig erwärmte Luft umgepumpt wird.

Aufgabe der Erfindung ist daher die Schaffung einer Lösung, mit der insbesondere ein Umpumpen vermieden wird unter gleichzeitiger, weitestgehender Verhinderung von Verkalkungen.

Mit einer Vorrichtung der eingangs bezeichneten Art wird diese Aufgabe gemäß der Erfindung dadurch gelöst, daß das Warmwasserreservoir innerhalb eines von einem Wärmeträgermedium durchfluteten Gehäuses vorgesehen ist, das Warmwasserreservoir von wenigstens einem kaminartigen Strömungskanal für das Wärmeübertragungsmedium durchsetzt ist und das Warmwasserreservoir zur Ausrichtung des kaminartigen Strömungskanales in Schwerkraftrichtung unabhängig von der Einbaulage der Vorrichtung schwenkbar im Gehäuse gelagert ist.

Mit der erfindungsgemäßen Gestaltung werden eine Reihe von Vorteilen erreicht. So kann als Wärmeträgermedium zwar beispielsweise auch Wasser herangezogen werden, da dieses aber das Warmwasserreservoir als warmes Brauchwasser nicht beaufschlagt, sondern lediglich als warmes Wärmeträgermedium umspült, kann es in einen geschlossenen Kreislauf geführt werden, so daß der Kalkeinsatz vermieden wird.

Um einen möglichst intensiven Wärmeübergang zwischen Wärme-trägermedium und dem zu erwärmenden Wasser zu erreichen, ist wenigstens ein kaminartiger Strömungskanal vorgesehen. Zweckmäßig kann auch hier eine Mehrzahl von kaminartigen Strömungskanälen vorgesehen sein, die für sich gesehen z.B. aus der FR-A-2 305 695 bekannt sind. Die Besonderheit der vorliegenden Erfindung liegt aber darin, diese kaminartigen Kanäle jederzeit so einstellen zu können, daß sie in Schwerkraftrichtung unabhängig etwa von einer Einbaulage der Vorrichtung einstellbar sind. Dies hat den besonderen Vorteil, daß die erfindungsgemäße Vorrichtung auf Dächern unterschiedlicher Neigung montiert werden kann, ohne die Vorteile des Naturablaufes aufgeben zu müssen, da die Position der kaminartigen Strömungskanäle entsprechend einstellbar ist.

Besonders zweckmäßig kann es sein, wenn das Warmwasserreservoir als Drehzylinder mit einer Reihe von kaminartigen von vom Wärmeübertragungsmedium durchströmbaren Strömungskanälen ausgebildet ist.

Mit dieser Lösung ist es möglich, bei einer Solaranlage unabhängig von deren speziellen Einbausituation immer einen Naturumlauf des Wärmeträgermediums zu ermöglichen, indem die kaminartigen Durchtrittsröhren in Schwerkraftrichtung ausgerichtet werden. Es hat sich gezeigt, daß man die Durchtrittsröhren für das Wärmeträgermedium in Vergleichsweise großen Durchmessern ausführen kann, so daß auch dadurch einer Verkalkung entgegengewirkt wird.

Zweckmäßig ist das Gehäuse des Wärmeträgermediums wärmeisoliert ausgebildet, wie dies die Erfindung ebenfalls vorsieht.

Vorteilhaft ist darüber hinaus auch, wenn der Kaltwasserzulauf und der Warmwasserablauf des Warmwasserreservoirs in dessen Schwenkachsen vorgesehen ist, was die Einstellung der Kaminrohre erleichtert. Grundsätzlich ist es bekannt, Kaltwasser- und Warmwasserzuläufe in Drehachsen anzuordnen, wie dies beispielsweise aus der US 4 587 952 hervorgeht. Zweckmäßige Ausgestaltungen der Erfindung ergeben sich dadurch, daß das das Warmwasserreservoir umgehende Gehäuse des Wärmeträgermediums wärmeisoliert ausgebildet ist oder daß der Kaltwasserzulauf und der Warmwasserablauf des Warmwasserreservoirs in den Schwenkachsen vorgesehen ist.

Eine weitere vorteilhafte Ausgestaltung der Erfindung besteht darin, den Kaltwasserzulauf und/oder den Warmwasserablauf des Warmwasserreservoirs mit Strömungsleittellern auszurüsten. In einem solchen Falle kann ggf. auf Strömungsleitbleche verzichtet werden.

Sollte dies aufgrund der Umgebungsparameter notwendig sein, kann auch eine Zusatzheizung integriert werden, etwa unmittelbar in den Warmwasserablauf im Bereich des Drehflansches.

Die Erfindung ist nachstehend anhand der Zeichnung beispielsweise näher erläutert. Diese zeigt in
- Fig. 1: in vereinfachter perspektivischer Darstellung eine Vorrichtung nach der Erfindung,
- Fig. 2: eine vereinfachte Seitenansicht,
- Fig. 3: eine vereinfachte Rückansicht gemäß Pfeil III in Fig. 2,
- Fig. 4: eine vereinfachte Aufsicht etwa gemäß Pfeil IV in Fig. 2 sowie in
- Fig. 5: eine vereinfachte Prinzipdarstellung etwa gemäß Fig. 2 einer abgewandelten Ausführungsform der Erfindung sowie in
- Fig. 6: eine Detailansicht eines Drehflanschbereiches gemäß Fig. 5.

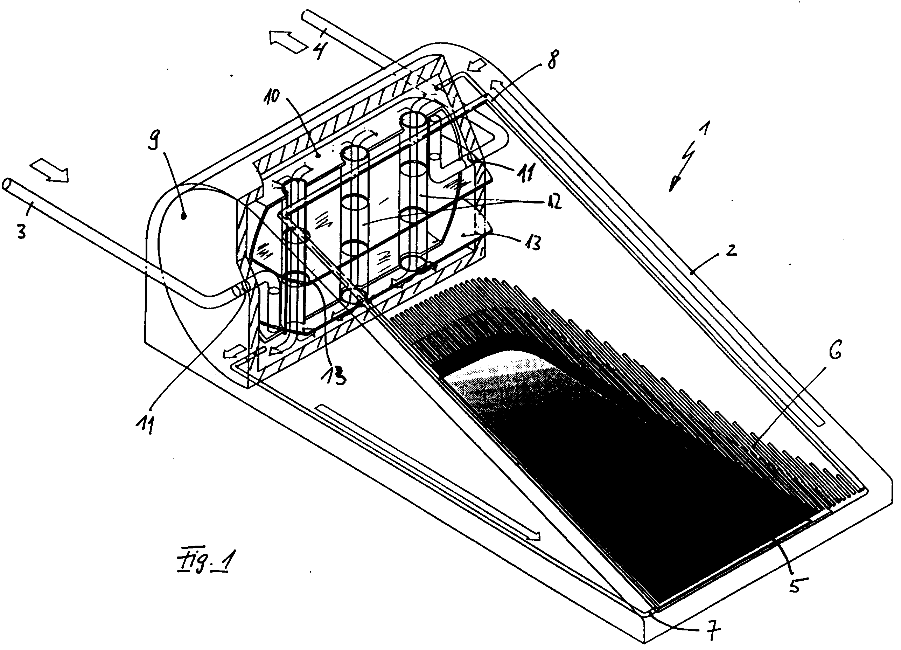

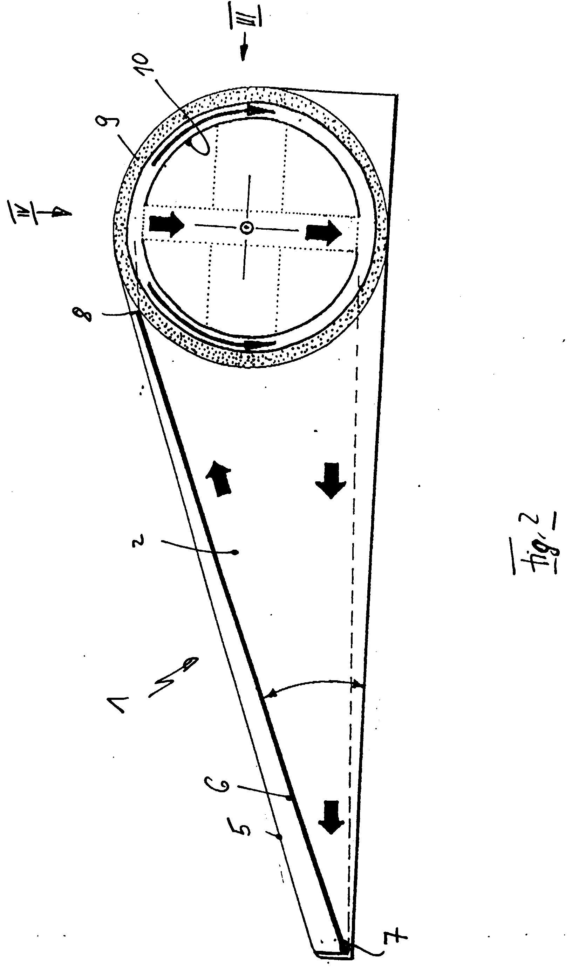

Die allgemein mit 1 bezeichnete Vorrichtung weist in querschnittlich etwa dreieckförmiges Gehäuse 2 auf, das mit einem Kaltwasserzulauf 3 und einer Warmwasserentnahme 4 ausgerüstet ist.

Auf der in der Gebrauchslage der Haupt sonneneinstrahlung zugewandten Gehäusefläche ist unter einer Glasscheibe 5 ein von einem Wärmeträgermedium durchströmter Absorber 6 vorgesehen mit einem unteren Zulauf 7 und einem oberen Auslauf 8.

Im oberen querschnittlich größten Bereich der Vorrichtung 1 ist ein wärmeisoliertes Gehäuse 9, das vom Wärmeträgermedium durchströmt wird, vorgesehen, wobei im Gehäuse 9 ein als Drehzylinder 10 ausgebildetes Warmwasserreservoir angeordnet ist.

Das Warmwasserreservoir 10 ist über stirnseitige Drehachsen 11 verschwenkbar angeordnet, wobei die Drehachsen 11 gleichzeitig die Durchtritte für den Kaltwasserzulauf 3 und den Warmwasserablauf 4 bilden.

Das Warmwasserreservoir 10 weist im dargestellten Beispiel drei kaminartige Durchtrittsrohre 12 auf, die in Schwerkraftrichtung einstellbar sind, um so einen natürlichen Umlauf des Wärmeträgermediums zu gewährleisten, was in der Figur durch Pfeile angedeutet ist.

Zur Führung des Warmwassers im Warmwasserreservoir 10 können auch Trenn- bzw. Leitbleche 13 vorgesehen sein, derart, daß von einem am Boden befindlichen Kaltwasserzulauf eine mehrfach umgelenkte Querströmung bis zum oben liegenden Warmwasserablauf gewährleistet ist.

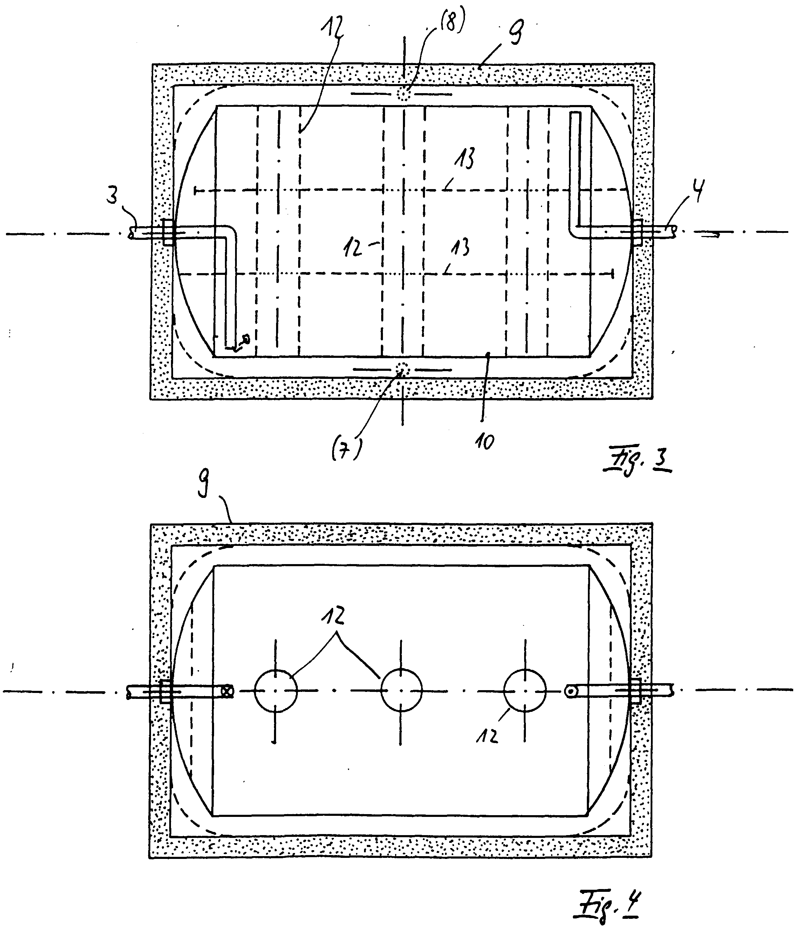

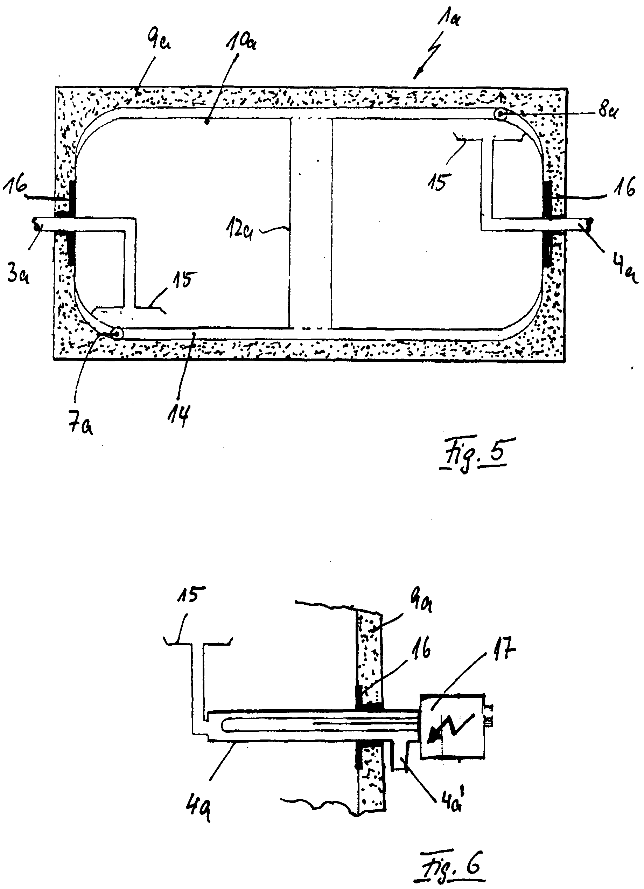

Fig. 5 zeigt ein abgewandeltes Ausführungsbeispiel, wobei baugleiche Teile mit der gleichen Bezugsziffer versehen sind, ergänzt durch ein "a". Hier weist die Vorrichtung 1a wiederum einen Drehzylinder 10a auf, der unter Freilassung eines Strömungsspaltes von einem wärmeisolierten Gehäuse 9a umgeben ist. In den Ringraum 14 mündet ein unterer Zulauf 7a für das Wärmeträgermedium sowie von dort auch ein oberer Auslauf 8a abgeht. Wiederum ist auch hier der Drehzylinder 10 mit wenigstens einem kaminartigen Strömungskanal 12a ausgerüstet.

Der Kaltwasserzulauf 3a sowie der Warmwasserablauf 4a ist bei diesem Ausführungsbeispiel mit je einem Strömungsleitteller 15 versehen, wobei der Zulauf bzw. der Ablauf je einen Drehflansch 16 durchsetzen.

In Fig. 6 ist die Möglichkeit angedeutet, in den Warmwasserablauf 4a eine elektrische Zusatzheizung 17 zu integrieren. Der Warmwasserauslaßstutzen ist dort mit 4a' bezeichnet.

Natürlich sind die beschriebenen Ausführungsbeispiele der Erfindung noch in vielfacher Hinsicht abzuändern, ohne den Grundgedanken zu verlassen. So ist die Erfindung insbesondere nicht auf die Anzahl und die Querschnittsform der kaminartigen Durchtrittsröhren 12 beschränkt, auch nicht auf eine bestimmte Art des Wärmeträgermediums u. dgl. mehr.

## Patentansprüche

1. Vorrichtung zur Warmwassererzeugung mittels Solarenergie mit einem Gehäuse, wobei ein Oberflächenbereich von einem Wärmeabsorber gebildet ist und wobei innerhalb des Gehäuses ein Warmwasserreservoir vorgesehen ist,
dadurch gekennzeichnet,
daß das Warmwasserreservoir (10) innerhalb eines von einem Wärmeträgermedium durchfluteten Gehäuses (9) vorgesehen ist,
daß das Warmwasserreservoir (10) von wenigstens einem kaminartigen Strömungskanal (12) für das Wärmeübertragungsmedium durchsetzt ist und
daß das Warmwasserreservoir zur Ausrichtung des kaminartigen Strömungskanales in Schwerkraftrichtung unabhängig von der Einbaulage der Vorrichtung schwenkbar im Gehäuse (9) gelagert ist.

2. Vorrichtung nach Anspruch 1,
dadurch gekennzeichnet,
daß das Warmwasserreservoir (10) als Drehzylinder mit einer Reihe von kaminartigen von vom Wärmeübertragungsmedium durchströmbaren Strömungskanälen (12) ausgebildet ist.

3. Vorrichtung nach Anspruch 1 oder 2,
dadurch gekennzeichnet,
daß das das Warmwasserreservoir (10) umgehende Gehäuse (9) des Wämeträgermediums wärmeisoliert ausgebildet ist.

4. Vorrichtung nach einem der vorangehenden Ansprüche,
dadurch gekennzeichnet,
daß der Kaltwasserzulauf (3) und der Warmwasserablauf (4) des Warmwasserreservoirs (10) in den Schwenkachsen (11) vorgesehen ist.

5. Vorrichtung nach einem der vorangehenden Ansprüche,
dadurch gekennzeichnet,
daß im Warmwasserreservoir (10) horizontale Strömungsleitbleche (13) vorgesehen sind.

6. Vorrichtung nach Anspruch 5 oder einem der vorangehenden Ansprüche,
dadurch gekennzeichnet,
daß der Kaltwasserzulauf (3) und der Warmwasserablauf (4) des Warmwasserreservoirs mit Strömungsleittellern ausgerüstet sind.

7. Vorrichtung nach einem der vorangehenden Ansprüche,
dadurch gekennzeichnet,
daß im Warmwasserablauf (4) eine Zusatzheizung vorgesehen ist.

8. Vorrichtung nach einem der vorangehenden Ansprüche,
dadurch gekennzeichnet,
daß die Verbindung zwischen Warmwasserreservoir (10) und Gehäuse (5) als von den Wasserzu- bzw. Wasserabläufen durchsetzte Drehflansche ausgebildet sind.

## Claims

1. Apparatus for producing hot water by means of solar energy comprising a housing, wherein a surface region is formed by a heat absorber and wherein a hot water reservoir is provided within the housing, characterised in that
the hot water reservoir (10) is provided within a housing (9) through which flows a heat carrier medium,
passing through the hot water reservoir (10) is at least one chimney-like flow passage (12) for the heat transmission medium, and
the hot water reservoir is mounted pivotably in the housing (9) for alignment of the chimney-like flow passage in the direction of the force of gravity irrespective of the position of installation of the apparatus.

2. Apparatus according to claim 1 characterised in that the hot water reservoir (10) is in the form of a rotary cylinder with a row of chimney-like flow passages (12) through which the heat transmission medium can flow.

3. Apparatus according to claim 1 or claim 2 characterised in that the housing (9) of the heat carrier medium, which housing surrounds the hot water reservoir (10), is of a heat-insulated nature.

4. Apparatus according to one of the preceding claims characterised in that the cold water feed (3) and the hot water discharge (4) of the hot water reservoir (10) are provided on the pivot axes (11).

5. Apparatus according to one of the preceding claims characterised in that horizontal flow guide plates (13) are provided in the hot water reservoir (10).

6. Apparatus according to claim 5 or one of the preceding claims characterised in that the cold water feed (3) and the hot water discharge (4) of the hot water reservoir are provided with flow guide trays.

7. Apparatus according to one of the preceding claims characterised in that an additional heating means is provided in the hot water discharge (4).

8. Apparatus according to one of the preceding claims characterised in that the connection between the hot water reservoir (10) and the housing (5) are in the form of rotary flanges through which the water feed and discharge pass.

## Revendications

1. Dispositif de génération d'eau chaude par énergie solaire, présentant un boîtier, une région superficielle étant formée par un absorbeur de chaleur, et un réservoir d'eau chaude étant prévu à l'intérieur du boîtier,
caractérisé par le fait
que le réservoir d'eau chaude (10) est prévu à l'intérieur d'un carter (9) parcouru par un agent caloporteur ;
que le réservoir d'eau chaude (10) est traversé par au moins un canal (12) du type cheminée, assurant l'écoulement de l'agent de transfert thermique ; et
que le réservoir d'eau chaude est monté à pivotement dans le carter (9), indépendamment de la position d'installation du dispositif, en vue de l'orientation, dans la direction de la pesanteur, du canal d'écoulement du type cheminée.

2. Dispositif selon la revendication 1,
caractérisé par le fait
que le réservoir d'eau chaude (10) est réalisé sous la forme d'un cylindre tournant muni d'une rangée de canaux d'écoulement (12) du type cheminées, pouvant être parcourus par l'agent de transfert thermique.

3. Dispositif selon la revendication 1 ou 2,
caractérisé par le fait
que le carter (9) de l'agent caloporteur, entourant le réservoir d'eau chaude (10), est réalisé avec isolation thermique.

4. Dispositif selon l'une des revendications précédentes,
caractérisé par le fait
que l'arrivée d'eau froide (3) et la sortie d'eau chaude (4) du réservoir d'eau chaude (10) sont prévues dans les axes de pivotement (11).

5. Dispositif selon l'une des revendications précédentes,
caractérisé par le fait
que des tôles horizontales (13) déflectrices de l'écoulement sont prévues dans le réservoir d'eau chaude (10).

6. Dispositif selon la revendication 5 ou l'une des revendications précédentes,
caractérisé par le fait
que l'arrivée d'eau froide (3) et la sortie d'eau chaude (4) du réservoir d'eau chaude sont munies de cuvettes déflectrices de l'écoulement.

7. Dispositif selon l'une des revendications précédentes,
caractérisé par le fait
qu'un chauffage additionnel est prévu dans la sortie d'eau chaude (4).

8. Dispositif selon l'une des revendications précédentes,
caractérisé par le fait
que la liaison, entre le réservoir d'eau chaude (10) et le carter (5), est réalisée sous la forme de brides tournantes respectivement traversées par les arrivées ou par les sorties d'eau.
